# EUROPÄISCHE PATENTANMELDUNG

(11) **EP 0 563 772 A1**
(43) Veröffentlichungstag der Anmeldung: **06.10.1993**
(21) Anmeldenummer: 93104840.9
(22) Anmeldetag: 24.03.1993
(51) Int. Cl.: C09B 67/22, D06P 3/52

(54) **Farbstoffmischungen, enthaltend Azo- und Chinophthalonfarbstoffe**

(30) Priorität: 01.04.1992 DE 4210763
(71) Anmelder: BASF Aktiengesellschaft, D-67063 Ludwigshafen (DE)
(72) Erfinder: Lange, Arno, Dr., W-6702 Bad Duerkheim (DE); Motzkus, Gert, W-6700 Ludwigshafen (DE); Degen, Helmut, W-6710 Frankenthal (DE); Walther, Volker, W-6714 Weisenheim (DE)

(57) **Zusammenfassung**

Farbstoffmischungen, enthaltend 50 bis 95 Gew.-%, eines 4-Chlor-2-nitrophenylazo-hydroxypyridonfarbstoffs sowie 5 bis 50 Gew.-% eines bromierten Chinophthalonfarbstoffs und/oder 5 bis 50 Gew.-% eines chlorieren Chinophthalonfarbstoffs und/oder 5 bis 20 Gew.-% unsubstituierten Chinophthalonfarbstoff, Farbstoffzubereitungen, enthaltend die neuen Farbstoffmischungen, sowie die Verwendung von Farbstoffmischungen zum Färben oder Bedrucken nach dem Direktdruckverfahren von Polyester.

## Beschreibung

Die vorliegende Erfindung betrifft neue Farbstoffmischungen, enthaltend 50 bis 95 Gew.-%, bezogen auf das Gesamtgewicht der Farbstoffe, eines Azofarbstoffs der Formel I 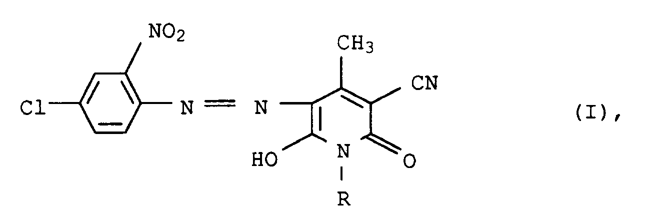
in der
- R: C₁-C₄-Alkyl bedeutet,
sowie 5 bis 50 Gew.-%, bezogen auf das Gesamtgewicht der Farbstoffe, des Chinophthalonfarbstoffs der Formel II a 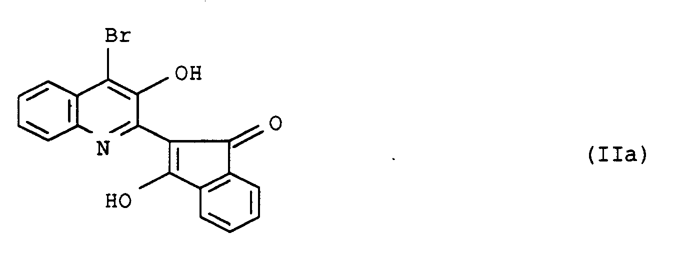
und/oder 5 bis 50 Gew.-%, bezogen auf das Gesamtgewicht der Farbstoffe, des Chinophthalonfarbstoffs der Formel IIb 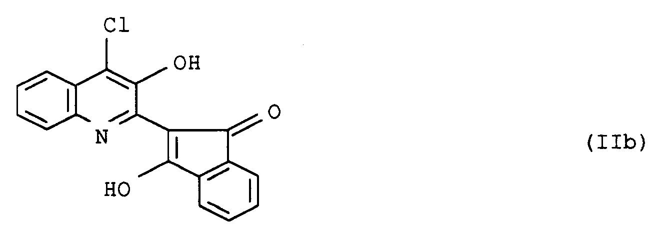
und/oder 5 bis 20 Gew.-%, bezogen auf das Gesamtgewicht der Farbstoffe, des Chinophthalonfarbstoffs der Formel II c 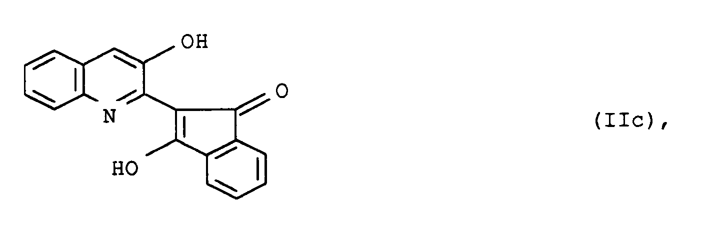
wobei für die benannten Vertragsstaaten BE, CH, DE, ES, FR, GB, IT und LI eine Farbstoffmischung, die, jeweils bezogen auf das Gesamgewicht der Farbstoffe, 53,73 Gew.-% des Farbstoffs der Formel I, in der R Ethyl bedeutet, und 46,27 Gew.-% des Farbstoffs der Formel IIa aufweist, ausgenommen ist, Farbstoffzubereitungen, enthaltend die neuen Farbstoffmischungen sowie die Verwendung von Farbstoffmischungen zum Färben oder Bedrucken nach dem Direktdruckverfahren von Polyester in textiler Form.

In der EP-A-83 553 sind Farbstoffmischungen, die Farbstoffe der Formel I (R = Ethyl) und IIc enthalten, für den Transferdruck beschrieben. Bei dieser Applikationsmethode wird der Farbkörper durch Sublimation aufgebracht. Weiterhin beschreibt EP-A-161 665 die Anwendung von Farbstoffmischungen, enthaltend die Farbstoffe der Formel I (R = Methyl), IIa und IIc, zum Färben von synthetischen Fasern.

Diese Mischungen weisen jedoch anwendungstechnische Mängel auf, insbesondere ist in diesem Zusammenhang ihre ungenügende Farbstärke und ihre schlechte Thermofixierechtheit zu nennen.

Aus der EP-A-491 387, die gemäß Art. 54(3) EPÜ für die benannten Vertragsstaaten BE, CH, DE, ES, FR, GB, IT und LI als Stand der Technik gilt, ist eine Farbstoffpräparation bekannt, die die Farbstoffe der Formel I (mit R = Ethyl) und IIa im Gewichtsverhältnis 53,73:46,27 enthält. Die Farbstoffpräparation enthält zudem Dispergiermittel und wird zum Färben von Polyester verwendet.

Aufgabe der vorliegenden Erfindung war es nun, neue Mischungen, enthaltend die Farbstoffe der Formel I und II, bereitzustellen, die die obengenannten Nachteile nicht mehr aufweisen.

Demgemäß wurden die eingangs näher bezeichneten Farbstoffmischungen gefunden.

Reste R sind z.B. Methyl, Ethyl, Propyl, Isopropyl, Butyl, Isobutyl oder sec-Butyl.

Bevorzugt sind solche Farbstoffmischungen, die einen Azofarbstoff der Formel I enthalten, in der R Ethyl oder Butyl bedeutet.

Bevorzugt sind weiterhin Farbstoffmischungen, die 70 bis 90 Gew.-%, bezogen auf das Gesamtgewicht der Farbstoffe, eines Azofarbstoffs der Formel I sowie 10 bis 30 Gew.-%, bezogen auf das Gesamtgewicht der Farbstoffe, des Chinophthalonfarbstoffs der Formel IIa und/oder 10 bis 30 Gew.-%, bezogen auf das Gesamtgewicht der Farbstoffe, des Chinophthalonfarbstoffs der Formel IIb und/oder 10 bis 15 Gew.-%, bezogen auf das Gesamtgewicht der Farbstoffe, des Chinophthalonfarbstoffs der Formel IIc enthalten.

Bevorzugt sind weiterhin Farbstoffmischungen, enthaltend den Chinophthalonfarbstoff der Formel IIa und/oder IIb.

Besonders bevorzugt sind Farbstoffmischungen, enthaltend den Chinophthalonfarbstoff der Formel IIa.

Bei den Farbstoffen der Formel I und II handelt es sich im allgemeinen um bekannte Farbstoffe. Sie sind, wie oben ausgeführt, z.B. in der EP-A-83 553 oder der dort zitierten Literatur beschrieben.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Dispergiermittel, wie Ligninsulfonate oder Sulfonierungsprodukte des Reaktionsproduktes von Formaldehyd mit Aromaten, Verdickungsmittel oder andere Hilfsstoffe, zugesetzt werden. Es ist auch möglich, bereits fertige Farbstoffpräparationen der jeweiligen Partner oder fertige Farbstoffpräparationen mit reinen Farbstoffen abzumischen.

Demgemäß betrifft die vorliegende Erfindung weiterhin Farbstoffzubereitungen, enthaltend 15 bis 60 Gew.-%, bezogen auf das Gewicht der Farbstoffzubereitung, einer eingangs näher bezeichneten erfindungsgemäßen Farbstoffmischung sowie 40 bis 80 Gew.-%, bezogen auf das Gewicht der Farbstoffzubereitung, Dispergiermittel, wobei für die benannten Vertragsstaaten BE, CH, DE, ES, FR, GB, IT und LI eine Farbstoffzubereitung, die jeweils bezogen auf das Gesamtgewicht der Farbstoffzubereitung, 28,8 Gew.-% Methylnaphthalinsulfonsäure-Formalin-Kondensationsprodukt, 17,4 Gew.-% Kresol-Formalin-Kondensationsprodukt, 13,6 Gew.-% Ligninsulfonsäure-Formalin-Kondensationsprodukt, 21,6 Gew.-% Farbstoff der Formel I, in der R Ethyl bedeutet, und 18,6 Gew.-% Farbstoff der Formel IIa aufweist, ausgenommen ist.

Ein weiterer Gegenstand der vorliegenden Erfindung ist die Verwendung von Farbstoffmischungen, enthaltend 50 bis 95 Gew.-%, bezogen auf das Gesamtgewicht der Farbstoffe, eines Azofarbstoffs der Formel I 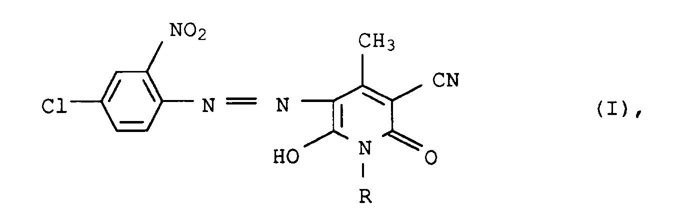
in der
- R: C₁-C₄-Alkyl bedeutet,
sowie 5 bis 50 Gew.-%, bezogen auf das Gesamtgewicht der Farbstoffe, eines oder mehrerer Chinophthalonfarbstoffe der Formel II 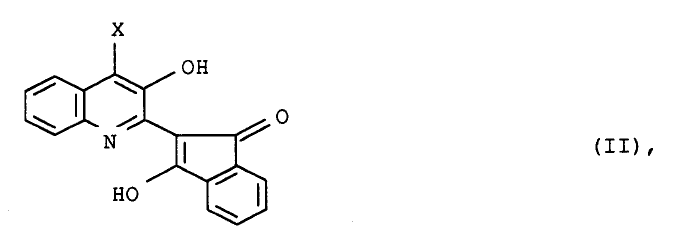
in der
- X: Wasserstoff, Chlor oder Brom bedeutet,
zum Färben von Polyester in textiler Form, wobei für die benannten Vertragsstaaten BE, CH, DE, ES, FR, GB, IT und LI die Verwendung einer Farbstoffmischung, die, jeweils bezogen auf das Gesamtgewicht der Farbstoffe, 53,73 Gew.-% des Farbstoffs der Formel I, in der R Ethyl bedeutet, und 46,27 Gew.-% des Farbstoffs der Formel II, in der X Brom bedeutet, aufweist, ausgenommen ist.

Ein weiterer Gegenstand der vorliegenden Erfindung ist die Verwendung von Farbstoffmischungen, enthaltend 50 bis 95 Gew.-%, bezogen auf das Gesamtgewicht der Farbstoffe, eines Azofarbstoffs der Formel I 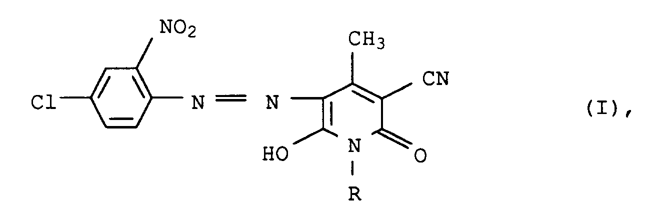
in der
- R: C₁-C₄-Alkyl bedeutet,
sowie 5 bis 50 Gew.-%, bezogen auf das Gesamtgewicht der Farbstoffe, eines oder mehrerer Chinophthalonfarbstoffe der Formel II 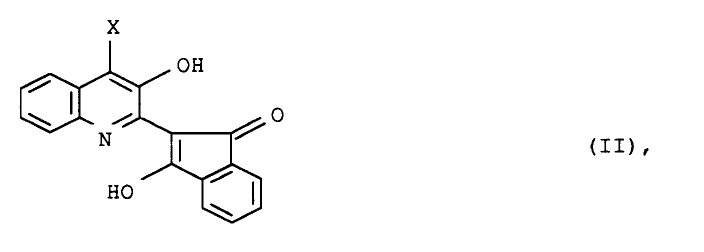
in der
- X: Wasserstoff, Chlor oder Brom bedeutet, zum Bedrucken von Polyester in textiler Form im Direktdruckverfahren.

Polyester in textiler Form sind beispielsweise Fasern, Gewebe oder Mischgewebe von Polyestern mit Baumwolle, Wolle, Celluloseacetat oder Triacetat. Man erhält Ausfärbungen oder Drucke in gelbem Farbton. Die Färbe- und Druckverfahren sind an sich bekannt. Im Gegensatz zum Transferdruckverfahren, bei dem der Farbstoff durch Sublimation von einem Träger auf das zu bedruckende Gut aufgebracht wird, wird beim Direktdruckverfahren die die Farbstoffmischung enthaltende Druckpaste direkt auf das zu bedruckende Gut aufgedruckt.

Überraschend ist, daß die erfindungsgemäßen Farbstoffmischungen über hohe Farbstärke und Thermofixierechtheit verfügen.

Die folgenden Beispiele sollen die Erfindung näher erläutern.

### Färbevorschrift

10 g Polyestergewebe werden bei einer Temperatur von 50°C in 200 ml einer Färbeflotte gegeben, die 0,5 Gew.-%, bezogen auf das Polyestergewebe, einer Farbstoffpräparation enthält und deren pH-Wert mittels Essigsäure auf 4,5 eingestellt ist. Man behandelt 5 Minuten bei 50°C, steigert dann die Temperatur der Flotte innerhalb von 30 Minuten auf 130°C, hält 60 Minuten bei dieser Temperatur und läßt dann innerhalb von 20 Minuten auf 60°C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65°C behandelt. Schließlich wird das Gewebe gespült, mit verdünnter Essigsäure neutralisiert, nochmals gespült und getrocknet.

Die obengenannte Farbstoffpräparation enthielt jeweils 40 Gew.-% an Farbstoffmischung, sowie 60 Gew.-% eines Dispergiermittels auf Basis von Ligninsulfonat, jeweils bezogen auf das Gewicht der Präparation.

Die Farbstoffmischung setzte sich dabei wie in der folgenden Tabelle angegeben zusammen, wobei folgende Azofarbstoffe verwendet wurden.

Farbstoff Ia: (R = C₂H₅)

Farbstoff Ib: (R = C₄H₉)

| Bsp. Nr. | Farbstoff Nr. [Gew.-%, bezogen auf die Farbstoffmischung] | | | |
|---|---|---|---|---|
| | Ia | Ib | IIa | IIb |
| 1 | 90 | 0 | 10 | 0 |
| 2 | 80 | 0 | 20 | 0 |
| 3 | 70 | 0 | 30 | 0 |
| 4 | 90 | 0 | 0 | 10 |
| 5 | 80 | 0 | 0 | 20 |
| 6 | 70 | 0 | 0 | 30 |
| 7 | 90 | 0 | 5 | 5 |
| 8 | 80 | 0 | 10 | 10 |
| 9 | 70 | 0 | 15 | 15 |
| 10 | 0 | 70 | 30 | 0 |

Man erhielt klare gelbe Färbungen mit hoher Farbstärke und guter Thermofixierechtheit.

## Patentansprüche

1. Farbstoffmischungen, enthaltend 50 bis 95 Gew.-%, bezogen auf das Gesamtgewicht der Farbstoffe, eines Azofarbstoffs der Formel I 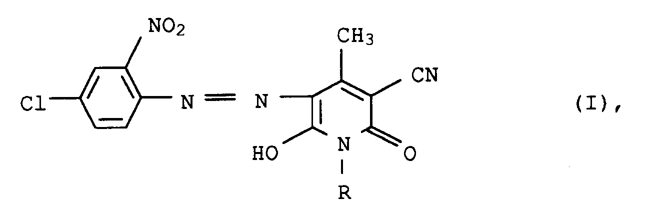 in der
R C₁-C₄-Alkyl bedeutet,
sowie 5 bis 50 Gew.-%, bezogen auf das Gesamtgewicht der Farbstoffe, des Chinophthalonfarbstoffs der Formel IIa 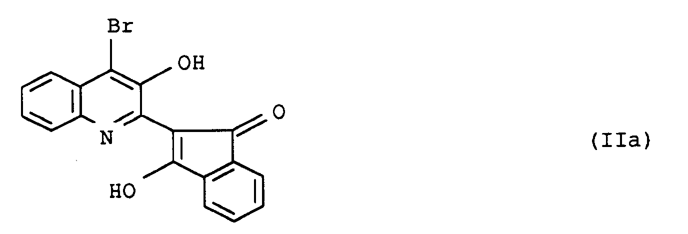 und/oder 5 bis 50 Gew.-%, bezogen auf das Gesamtgewicht der Farbstoffe, des Chinophthalonfarbstoffs der Formel IIb 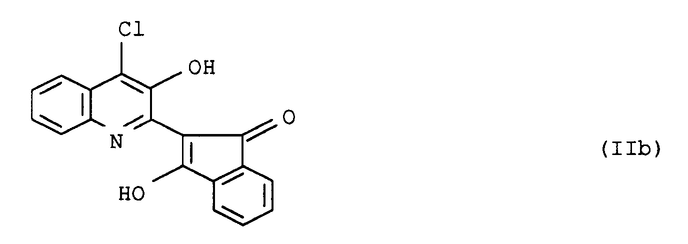 und/oder 5 bis 20 Gew.-%, bezogen auf das Gesamtgewicht der Farbstoffe, des Chinophthalonfarbstoffs der Formel IIc

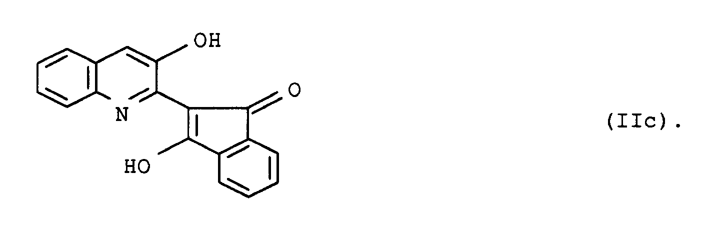

2. Farbstoffmischungen nach Anspruch 1, enthaltend 70 bis 90 Gew.-%, bezogen auf das Gesamtgewicht der Farbstoffe, eines Azofarbstoffs der Formel I sowie 10 bis 30 Gew.-%, bezogen auf das Gesamtgewicht der Farbstoffe, des Chinophthalonfarbstoffs der Formel IIa und/oder 10 bis 30 Gew.-%, bezogen auf das Gesamtgewicht der Farbstoffe, des Chinophthalonfarbstoffs der Formel IIb, und/oder 10 bis 15 Gew.-%, bezogen auf das Gesamtgewicht der Farbstoffe, des Chinophthalonfarbstoffs der Formel IIc.

3. Farbstoffzubereitungen, enthaltend 15 bis 60 Gew.-%, bezogen auf das Gewicht der Farbstoffzubereitung, einer Farbstoffmischung gemäß Anspruch 1 sowie 40 bis 85 Gew.-%, bezogen auf das Gewicht der Farbstoffzubereitung, Dispergiermittel.

4. Verwendung von Farbstoffmischungen, enthaltend 50 bis 95 Gew.-%, bezogen auf das Gesamtgewicht der Farbstoffe, eines Azofarbstoffs der Formel I 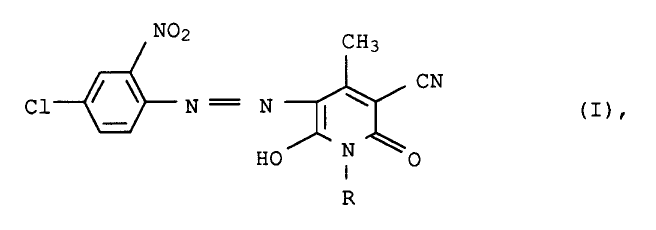 in der
R C₁-C₄-Alkyl bedeutet,
sowie 5 bis 50 Gew.-%, bezogen auf das Gesamtgewicht der Farbstoffe, eines oder mehrerer Chinophthalonfarbstoffe der Formel II 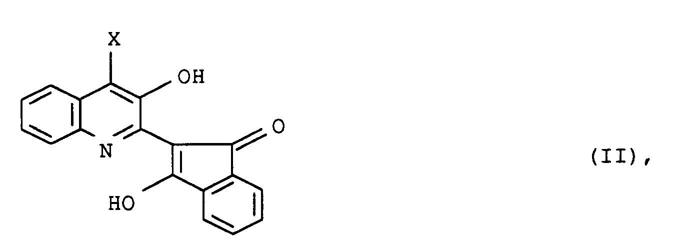 in der
X Wasserstoff, Chlor oder Brom bedeutet,
zum Färben von Polyester in textiler Form.

5. Verwendung von Farbstoffmischungen, enthaltend 50 bis 95 Gew.-%, bezogen auf das Gesamtgewicht der Farbstoffe, eines Azofarbstoffs der Formel I 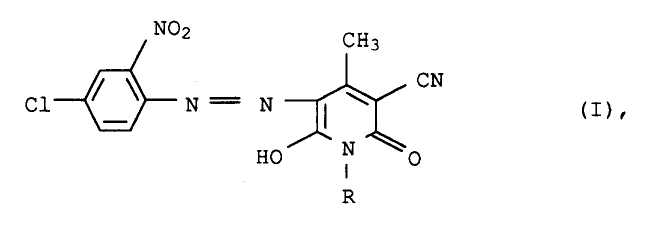 in der
R C₁-C₄-Alkyl bedeutet,
sowie 5 bis 50 Gew.-%, bezogen auf das Gesamtgewicht der Farbstoffe, eines oder mehrerer Chinophthalonfarbstoffe der Formel II 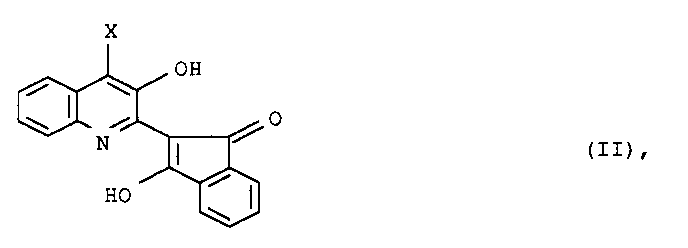 in der
X Wasserstoff, Chlor oder Brom bedeutet,
zum Bedrucken von Polyester in textiler Form im Direktdruckverfahren.

## Patentansprüche (Patentansprüche für folgende(n) Vertragsstaat(en): BE, CH, DE, ES, FR, GB, IT, LI)

1. Farbstoffmischungen, enthaltend 50 bis 95 Gew.-%, bezogen auf das Gesamtgewicht der Farbstoffe, eines Azofarbstoffs der Formel I 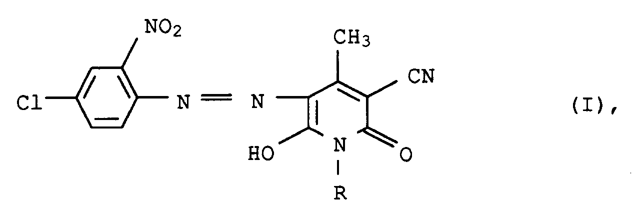 in der
R C₁-C₄-Alkyl bedeutet,
sowie 5 bis 50 Gew.-%, bezogen auf das Gesamtgewicht der Farbstoffe, des Chinophthalonfarbstoffs der Formel IIa 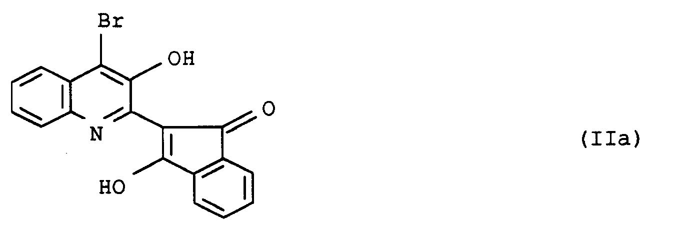 und/oder 5 bis 50 Gew.-%, bezogen auf das Gesamtgewicht der Farbstoffe, des Chinophthalonfarbstoffs der Formel IIb 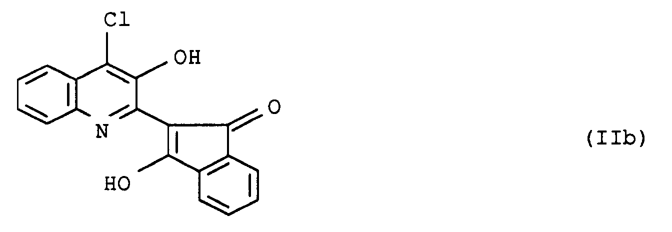 und/oder 5 bis 20 Gew.-%, bezogen auf das Gesamtgewicht der Farbstoffe, des Chinophthalonfarbstoffs der Formel IIc 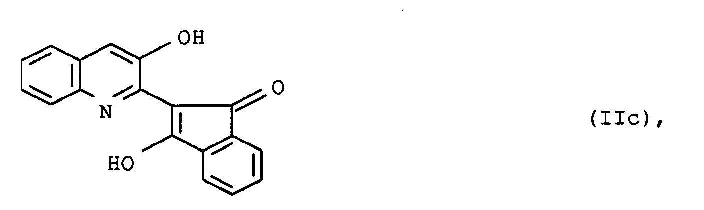 wobei eine Farbstoffmischung, die, jeweils bezogen auf das Gesamgewicht der Farbstoffe, 53,73 Gew.-% des Farbstoffs der Formel I, in der R Ethyl bedeutet, und 46,27 Gew.-% des Farbstoffs der Formel IIa aufweist, ausgenommen ist.

2. Farbstoffmischungen nach Anspruch 1, enthaltend 70 bis 90 Gew.-%, bezogen auf das Gesamtgewicht der Farbstoffe, eines Azofarbstoffs der Formel I sowie 10 bis 30 Gew.-%, bezogen auf das Gesamtgewicht der Farbstoffe, des Chinophthalonfarbstoffs der Formel IIa und/oder 10 bis 30 Gew.-%, bezogen auf das Gesamtgewicht der Farbstoffe, des Chinophthalonfarbstoffs der Formel IIb, und/oder 10 bis 15 Gew.-%, bezogen auf das Gesamtgewicht der Farbstoffe, des Chinophthalonfarbstoffs der Formel IIc.

3. Farbstoffzubereitungen, enthaltend 15 bis 60 Gew.-%, bezogen auf das Gewicht der Farbstoffzubereitung, einer Farbstoffmischung gemäß Anspruch 1 sowie 40 bis 85 Gew.-%, bezogen auf das Gewicht der Farbstoffzubereitung, Dispergiermittel, wobei eine Farbstoffzubereitung, die jeweils bezogen auf das Gesamtgewicht der Farbstoffzubereitung, 28,8 Gew.-% Methylnaphthalinsulfonsäure-Formalin-Kondensationsprodukt, 17,4 Gew.-% Kresol-Formalin-Kondensationsprodukt, 13,6 Gew.-% Ligninsulfonsäure-Formalin-Kondensationsprodukt, 21,6 Gew.-% Farbstoff der Formel I, in der R Ethyl bedeutet, und 18,6 Gew.-% Farbstoff der Formel IIa aufweist, ausgenommen ist.

4. Verwendung von Farbstoffmischungen, enthaltend 50 bis 95 Gew.-%, bezogen auf das Gesamtgewicht der Farbstoffe, eines Azofarbstoffs der Formel I 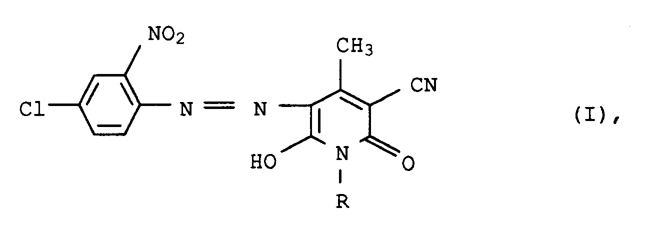 in der
R C₁-C₄-Alkyl bedeutet,
sowie 5 bis 50 Gew.-%, bezogen auf das Gesamtgewicht der Farbstoffe, eines oder mehrerer Chinophthalonfarbstoffe der Formel II 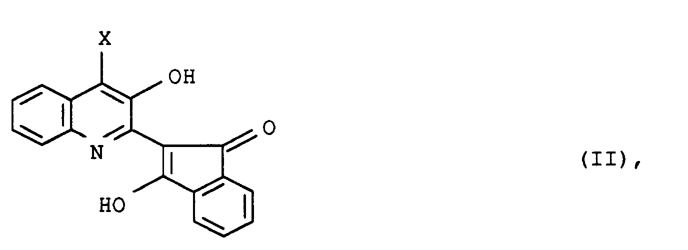 in der
X Wasserstoff, Chlor oder Brom bedeutet,
zum Färben von Polyester in textiler Form, wobei die Verwendung einer Farbstoffmischung, die, jeweils bezogen auf das Gesamtgewicht der Farbstoffe, 53,73 Gew.-% des Farbstoffs der Formel I, in der R Ethyl bedeutet, und 46,27 Gew.-% des Farbstoffs der Formel II, in der X Brom bedeutet, aufweist, ausgenommen ist.

5. Verwendung von Farbstoffmischungen, enthaltend 50 bis 95 Gew.-%, bezogen auf das Gesamtgewicht der Farbstoffe, eines Azofarbstoffs der Formel I 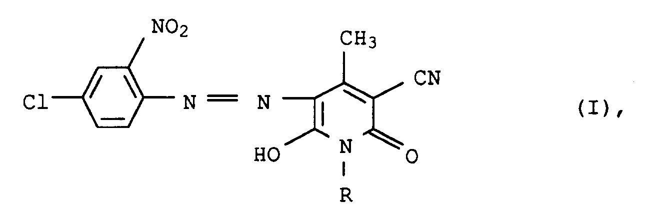 in der
R C₁-C₄-Alkyl bedeutet,
sowie 5 bis 50 Gew.-%, bezogen auf das Gesamtgewicht der Farbstoffe, eines oder mehrerer Chinophthalonfarbstoffe der Formel II 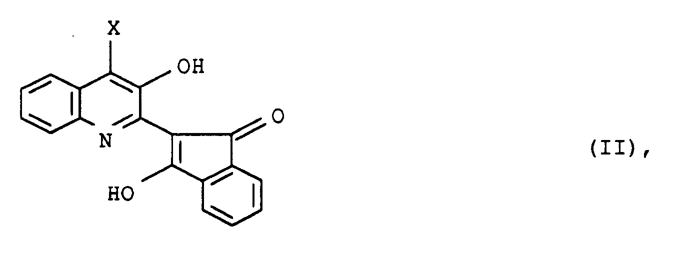 in der
X Wasserstoff, Chlor oder Brom bedeutet,
zum Bedrucken von Polyester in textiler Form im Direktdruckverfahren.
